# FASCICULE DE BREVET EUROPEEN

(11) **EP 3 826 919 B1**
(45) Date de publication et mention de la délivrance du brevet: **07.09.2022**
(21) Numéro de dépôt: 19742054.0
(22) Date de dépôt: 23.07.2019
(51) Int. Cl.: B64C 1/14, E05F 1/10, E05F 1/08

(54) **DISPOSITIF D'OUVERTURE D'URGENCE D'UNE PORTE D'AÉRONEF, À ORGANE DE RETENUE À CROCHET**
NOTÖFFNUNGSVORRICHTUNG FÜR EINE FLUGZEUGTÜR MIT EINEM HALTEELEMENT MIT EINEM HAKEN
EMERGENCY OPENING DEVICE FOR AN AIRCRAFT DOOR, COMPRISING A RETAINING MEMBER WITH A HOOK

(30) Priorité: 24.07.2018 FR 1856873
(43) Date de publication de la demande: 02.06.2021
(73) Titulaire: Latecoere, 31500 Toulouse, Occitanie (FR)
(72) Inventeur: CAPRON, Nicolas, 31320 CASTANET TOLOSAN OCCITANIE (FR)
(74) Mandataire: Junca, Eric
(86) Numéro de dépôt international: PCT/EP2019/069760
(87) Numéro de publication internationale: WO 2020/020866

(56) Documents cités:
- EP-A1- 2 644 495
- DE-U1-202016 003 562
- FR-A1- 2 975 967
- US-A- 5 289 615
- US-A1- 2002 184 733
- US-A1- 2016 002 965

## Description

### DOMAINE TECHNIQUE

L'invention concerne le domaine de l'aéronautique et a trait à un dispositif d'ouverture d'urgence d'une porte d'aéronef dotée d'un mécanisme d'ouverture.

Les portes d'aéronefs qui comportent un mécanisme d'ouverture peuvent être ouvertes pour permettre la sortie et l'entrée de passagers ou pour permettre l'évacuation en cas d'urgence. En cas d'évacuation d'urgence des passagers, les portes d'aéronefs, qu'elles soient des portes de passager ou des portes d'évacuation d'urgence, comportent usuellement un dispositif d'ouverture d'urgence qui, s'il est activé, provoque une ouverture rapide et sans effort des portes, sans nécessiter d'intervention humaine.

De tels dispositifs d'ouverture d'urgence comprennent classiquement des moyens d'actionnement du mécanisme d'ouverture de la porte, commutables entre un état passif et un état actif d'activation du mécanisme d'ouverture (ce qui provoque l'ouverture de la porte), et des moyens d'activation des moyens d'actionnement (qui permettent à un utilisateur de déclencher l'ouverture d'urgence).

### ÉTAT DE LA TECHNIQUE

A l'heure actuelle, tel que notamment décrit dans les demandes de brevet FR2830564 et EP0741073, les moyens d'actionnement consistent classiquement en un actionneur de type pneumatique alimenté au moyen d'une réserve annexe de fluide moteur. De tels moyens d'actionnement présentent toutefois plusieurs inconvénients. En effet, et en premier lieu, ils s'avèrent d'un poids et d'un encombrement relativement importants, en raison notamment de la présence de la réserve annexe de fluide moteur. De plus, ils imposent d'effectuer un contrôle périodique de la pression du fluide moteur, et de remplacer périodiquement la réserve annexe même en l'absence d'utilisation de cette dernière. Enfin, après activation du dispositif d'ouverture d'urgence ces moyens d'actionnement imposent, en vue d'être à nouveau opérationnels, un remplacement de la réserve annexe de fluide moteur.

Une autre solution actuelle décrite notamment dans la demande de brevet FR2864021 permet de diminuer l'encombrement et le poids des moyens d'actionnement. En effet, selon cette solution, les moyens d'actionnement consistent en un vérin pyrotechnique, c'est-à-dire un vérin autonome n'exigeant pas de source d'alimentation en fluide moteur. Par contre, de tels vérins pyrotechniques nécessitent d'être périodiquement inspectés et remplacés même en l'absence d'utilisation. Ces vérins pyrotechniques doivent, en outre, être également remplacés après activation du dispositif d'ouverture d'urgence.

La demande de brevet FR2975967 décrit un dispositif d'ouverture d'urgence d'aéronef qui pallie les inconvénients décrits ci-dessus. Ce dispositif d'ouverture d'urgence consiste en des moyens d'actionnement de conception mécanique permettant de se passer d'éléments pneumatiques ou pyrotechniques. Le poids et l'encombrement du dispositif d'ouverture d'urgence sont ainsi réduits, la fiabilité est augmentée, et ce dispositif requiert peu ou pas de maintenance. Cependant, le dispositif d'ouverture d'urgence décrit nécessite des moyens d'activation comportant un électroaimant. Ce dispositif d'ouverture d'urgence n'est donc pas entièrement mécanique puisqu'il a recours à un élément électromécanique qui nécessite une source d'énergie électrique externe, ainsi qu'un dispositif de commande adapté à relier l'électroaimant à cette source d'énergie électrique externe. Ce dispositif d'ouverture de porte nécessite donc, en plus de cette source d'énergie électrique externe, des câblages d'alimentation et de commande qui peuvent être une source supplémentaire de complexité et de dysfonctionnement. La raison pour laquelle un électroaimant est nécessaire dans ce dispositif d'ouverture d'urgence est que l'organe de retenue exerce une force importante sur un organe de manœuvre, de sorte que le passage en position ouverte de l'organe de retenue en vue de libérer l'organe de manœuvre pour l'ouverture d'urgence nécessite de vaincre cette force. Le dispositif d'ouverture d'urgence comporte un tronçon de réarmement et des mâchoires qui permettent d'obtenir un effort de retenue très important permettant d'utiliser des moyens élastiques présentant un tarage conséquent. Dans cette configuration, la réalisation d'un organe de retenue purement mécanique, et activable par un individu, nécessiterait un bras de levier trop important et incompatible avec les objectifs de compacité du dispositif d'ouverture d'urgence.

### EXPOSÉ DE L'INVENTION

Le but de l'invention est d'améliorer les dispositifs d'ouverture d'urgence de l'art antérieur en fournissant un tel dispositif dont le fonctionnement et la commande sont entièrement mécaniques et dont le passage de l'organe de retenue de sa position fermée où il verrouille l'organe de manœuvre à sa position ouverte où il libère cet organe de manœuvre en vue de l'ouverture d'urgence ne nécessite que peu d'effort de la part de l'utilisateur qui déclenche le dispositif d'ouverture d'urgence.

À cet effet, l'invention vise un dispositif d'ouverture d'urgence d'une porte d'aéronef dotée d'un mécanisme d'ouverture, comprenant :
- des moyens d'actionnement du mécanisme d'ouverture, commutables entre un état passif et un état actif d'activation du mécanisme d'ouverture, et comprenant : un organe de manœuvre tubulaire doté d'une première extrémité de liaison avec la porte, et d'une deuxième extrémité de verrouillage ; des moyens élastiques de compression disposés entre un élément de butée fixe et l'organe de manœuvre ; un organe de retenue de la deuxième extrémité de verrouillage, mobile entre une position fermée de verrouillage de la deuxième extrémité de verrouillage, dans une position de l'organe de manœuvre correspondant à l'état passif des moyens d'actionnement dans laquelle les moyens élastiques sont maintenus comprimés, et une position ouverte de libération de la deuxième extrémité de verrouillage autorisant le déplacement de l'organe de manœuvre selon un axe de déplacement vers une position correspondant à l'état actif des moyens d'actionnement, sous l'effet de l'effort résultant de l'expansion des moyens élastiques ;
- des moyens d'activation des moyens d'actionnement adaptés pour entrainer l'ouverture de l'organe de retenue.

Dans ce dispositif d'ouverture d'urgence :
- l'organe de manœuvre comporte un doigt radial de retenue sur sa deuxième extrémité de verrouillage ;
- l'organe de retenue comporte un crochet qui présente une surface d'arrêt, l'organe de retenue étant rotatif autour de l'axe de déplacement entre sa position fermée, où la surface d'arrêt est en contact avec le doigt radial de retenue pour le verrouillage de la deuxième extrémité de verrouillage, et sa position ouverte, où la surface d'arrêt est à l'écart du doigt radial de retenue.

Dans la présente description et les revendications, l'expression « liaison avec la porte » s'entend relativement à la porte d'aéronef au sens large. La porte d'aéronef au sens large inclut l'ouvrant de la porte, le mécanisme d'ouverture de porte, ou encore la structure encadrant la porte et reliée au fuselage (correspondant au chambranle de la porte). Ainsi, la première extrémité de l'organe d'actionnement est reliée à un élément de la porte (ouvrant, mécanisme d'ouverture, ou structure encadrante) et l'élément de butée fixe est reliée à un autre élément de la porte (ouvrant, mécanisme d'ouverture, ou structure encadrante) tels que l'expansion des moyens élastiques provoque l'actionnement du mécanisme d'ouverture de la porte, et l'ouverture effective de la porte. Par exemple, la première extrémité de l'organe d'actionnement peut être fixée sur le mécanisme d'ouverture de la porte, et l'élément de butée fixe peut être fixé sur l'ouvrant de la porte. Autre exemple, la première extrémité de l'organe d'actionnement peut être fixée sur l'ouvrant de la porte, et l'élément de butée fixe peut être fixé sur la structure encadrante de la porte.

Un tel dispositif d'ouverture d'urgence présente tous les avantages d'un dispositif mécanique tel que décrit dans le document FR2975967. Ces moyens d'actionnement présentent un poids et un encombrement réduit. La conception mécanique des moyens d'actionnement ne requiert pas de maintenance particulière en l'absence d'utilisation du dispositif d'ouverture. L'utilisation du dispositif d'ouverture n'implique pas qu'un organe de déclenchement doive être remplacé, comme avec les dispositifs pneumatiques ou pyrotechniques. Aucun fluide moteur n'est nécessaire pour activer les moyens d'actionnement.

Le dispositif selon l'invention est, de plus, entièrement mécanique et ne requiert aucun branchement à une source d'énergie externe ni à une commande déportée. Un tel dispositif forme un produit fini de type vérin mécanique entièrement autonome, ce qui est un gage de fiabilité et de sureté de fonctionnement appréciables dans le domaine de l'aéronautique et plus particulièrement des dispositifs d'ouverture de secours.

Bien que le dispositif selon l'invention soit entièrement mécanique et autonome, il peut comporter des moyens élastiques à tarage important, c'est-à-dire destiné à exercer une force d'ouverture importante sur le mécanisme d'ouverture de la porte, ce qui est nécessaire dans cette application d'ouverture d'urgence de porte. Malgré le tarage important des éléments élastiques, l'activation des moyens d'actionnement se fait sans effort grâce à l'organe de retenue rotatif.

Le dispositif d'ouverture d'urgence selon l'invention peut comporter les caractéristiques additionnelles suivantes, seules ou en combinaison :
- la deuxième extrémité de verrouillage est radialement traversée de part en part par le doigt radial de retenue ;
- l'organe de retenue comporte un verrou rotatif muni d'une languette s'étendant axialement, le crochet étant pratiqué dans la languette ;
- le verrou rotatif comporte deux languettes s'étendant axialement, un crochet étant pratiqué dans chaque languette, deux gorges pour le passage du doigt radial de retenue étant ménagées entre les languettes ;
- les moyens d'activation des moyens d'actionnement comportent un levier adapté à provoquer la rotation de l'organe de retenue ;
- l'élément de butée fixe comporte : une collerette d'appui pour les moyens élastiques ; une fenêtre de travail adaptée à la course du levier et interrompant la collerette d'appui ;
- l'organe de retenue présente une forme s'inscrivant dans un cylindre coaxial avec l'organe de manœuvre ;
- l'organe de retenue est monté tournant par rapport à l'élément de butée fixe ;
- le dispositif comporte un cylindre d'axe fixé sur l'élément de butée fixe, l'organe de manœuvre étant monté coulissant sur le cylindre d'axe suivant l'axe de déplacement ;
- l'organe de manœuvre entoure le cylindre d'axe et comporte une portion de glissement guidant le coulissement de l'organe de manœuvre sur le cylindre d'axe ;
- l'organe de retenue entoure le cylindre d'axe et est monté tournant sur le cylindre d'axe ;
- l'organe de retenue est axialement fixé sur le cylindre d'axe en étant maintenu entre deux butées axiales glissantes ;
- le cylindre d'axe comporte une rainure de guidage pour le guidage le long de l'axe de déplacement du doigt radial de retenue ;
- le doigt radial de retenue traverse radialement le cylindre d'axe au niveau de la rainure de guidage ;
- la rainure de guidage comporte une butée de fin de course pour le doigt radial de retenue ;
- le doigt radial de retenue comporte une bague de roulage adaptée à rouler sur la surface d'arrêt ;
- la surface d'arrêt est sensiblement orthogonale à l'axe de déplacement ;
- la surface d'arrêt forme, par rapport à une surface orthogonale à l'axe de déplacement, un angle compris entre 1 et 5 degrés ;
- les moyens élastiques de compression comportent un ressort tubulaire entourant, au moins partiellement, l'organe de manœuvre, et dont les extrémités sont disposées entre l'élément de butée fixe et l'organe de manœuvre.

### PRESENTATION DES FIGURES

D'autres caractéristiques et avantages de l'invention apparaitront à la lecture de la description non limitative qui suit, en référence aux dessins annexés dans lesquels :
- la figure 1 est une vue en perspective d'un dispositif d'ouverture d'urgence selon l'invention dans son état passif ;
- la figure 2 représente le dispositif de la figure 1 dans son état actif ;
- la figure 3 est une coupe longitudinale du dispositif dans sa position de la figure 1 ;
- la figure 4 est une coupe longitudinale du dispositif dans sa position de la figure 2 ;
- la figure 5 est similaire à la figure 3, l'organe de manœuvre étant en position d'ouverture de service ;
- la figure 6 est une vue agrandie du rectangle VI de la figure 5 ;
- la figure 7 représente l'organe de retenue et le doigt axial de retenue du dispositif dans sa position de la figure 1 ;
- la figure 8 représente en perspective l'organe de retenue et le doigt axial de retenue du dispositif dans sa position de la figure 2 ;
- la figure 9 représente les éléments de la figure 7 vus de dessus ;
- la figure 10 est similaire à la figure 9, pour une variante de l'organe de retenue.

### DESCRIPTION DÉTAILLÉE

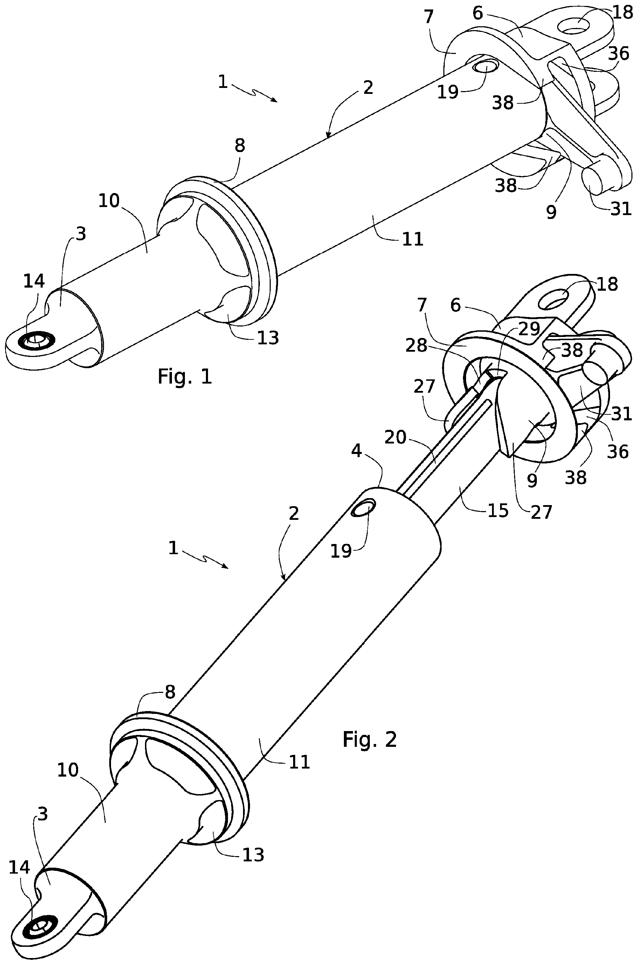

Le dispositif 1 d'ouverture d'urgence de porte d'aéronef selon l'invention est représenté en perspective aux figures 1 et 2, respectivement dans son état passif et dans son état actif. Ce dispositif 1 est destiné à être relié par ses extrémités à des éléments de la porte d'aéronef de sorte que l'expansion de ce dispositif 1 (dans l'état actif, figure 2) provoque l'ouverture d'urgence de la porte.

Ce dispositif 1 d'ouverture d'urgence peut être positionné sur tout type de porte ou d'ouvrant d'un aéronef, disposant d'un mécanisme d'ouverture. Les mécanismes d'ouverture de porte d'aéronef sont bien connus et ne seront pas décrits plus en détail ici. Le dispositif 1 peut par exemple être monté pour coopérer avec un mécanisme d'ouverture de porte à transmission par chaine tel que décrit dans le document FR2975967, ou encore dans d'autres mécanismes d'ouverture connus tels que des mécanismes à biellettes formant un parallélogramme déformable.

Quel que soit le type de mécanisme d'ouverture de porte d'aéronef, le dispositif 1 d'ouverture d'urgence permet, lorsqu'il est activé par un utilisateur, l'ouverture rapide et automatique de la porte de l'aéronef en vue de l'évacuation de ce dernier.

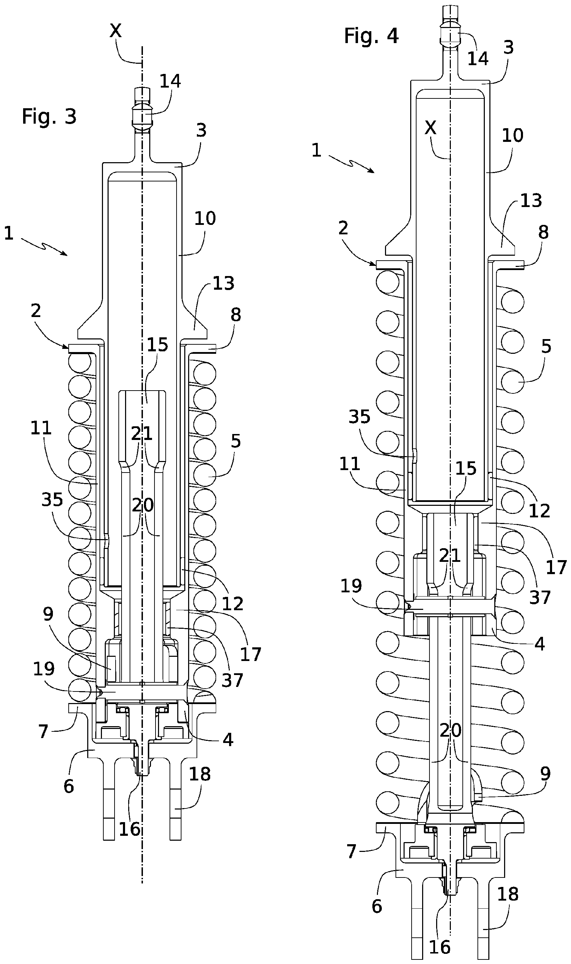

En référence aux figures 3 et 4, le dispositif 1 comporte des moyens d'actionnement du mécanisme d'ouverture de la porte qui sont commutables entre l'état passif de la figure 1 et l'état actif de la figure 2. Dans l'état passif, le dispositif 1 n'exerce pas d'effort sur la porte ou le mécanisme d'ouverture de la porte, la fonction d'ouverture d'urgence n'est pas activée, ce qui correspond à l'état normal de fonctionnement du mécanisme d'ouverture de la porte. Dans l'état actif, en cas d'urgence et lorsque l'évacuation de l'aéronef est nécessaire, le mécanisme d'ouverture de la porte est activé grâce à une force exercée par le dispositif 1 jusqu'à l'ouverture complète de la porte (dispositif 1 dans la position des figures 2 et 4).

En référence aux figures 3 et 4, ces moyens d'actionnement du mécanisme d'ouverture de la porte comprennent un organe de manœuvre tubulaire 2 qui est mobile selon un axe de déplacement X qui est son axe longitudinal. Cet organe de manœuvre 2 comporte une première extrémité 3 de liaison avec un élément de la porte non représenté (par exemple le mécanisme d'ouverture), et comporte une deuxième extrémité 4 dite de verrouillage. La première extrémité 3 comporte une rotule 14 permettant l'accouplement du dispositif 1 avec un élément de la porte.

Dans toute la description et les revendications, les références « axial » et « radial » se référent a l'axe X.

Les moyens d'actionnement comportent également des moyens élastiques de compression qui sont constitués ici d'un ressort 5 cylindrique qui est disposé entre un élément de butée fixe 6 et l'organe de manœuvre 2. Sur les figures 1 et 2, le ressort 5 n'a pas été représenté pour simplifier la figure. L'élément de butée fixe 6 comporte une collerette 7 permettant l'appui d'une extrémité du ressort 5 et l'organe de manœuvre 2 comporte également une collerette 8 permettant l'appui de l'autre extrémité du ressort 5. Dans l'état passif des moyens d'actionnement, le ressort 5 est comprimé et les deux collerettes 7, 8 sont rapprochées au maximum, tandis que dans son état actif, les deux collerettes 7, 8 sont éloignées l'une de l'autre sous l'effet de la force du ressort 5. L'élément 6 de butée fixe comporte deux trous de fixation 18 pour sa fixation sur un élément de la porte de l'aéronef de telle sorte que l'expansion du ressort 5 provoquera l'ouverture de cette porte.

Les moyens d'actionnement du dispositif 1 comportent de plus un organe de retenue de la deuxième extrémité de verrouillage 4 de l'organe de manœuvre 2, cet organe de retenue étant ici constitué d'un verrou rotatif 9 qui est mobile en rotation autour de l'axe longitudinal de l'organe de manœuvre 2.

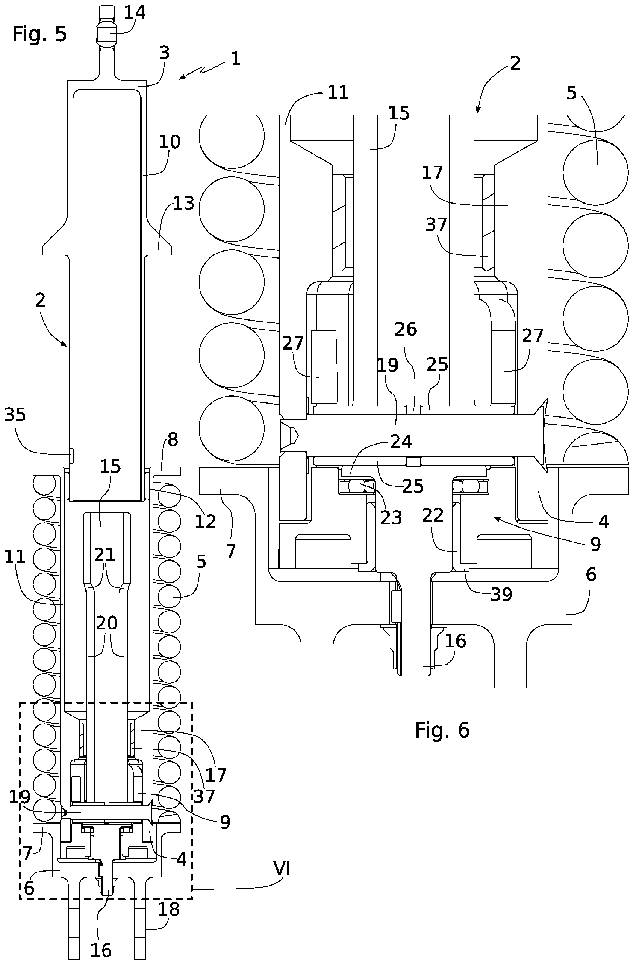

L'organe de manœuvre 2 est un élément télescopique constitué d'un tube 10 de première extrémité et d'un tube 11 de deuxième extrémité pouvant coulisser l'un dans l'autre. Dans le présent exemple, le tube 10 de première extrémité présente un diamètre externe inférieur au diamètre interne du tube 11 de deuxième extrémité de sorte que le tube 10 de première extrémité puisse être inséré à l'intérieur du tube 11 de deuxième extrémité sur une portion d'emmanchement. Un palier de glissement 12, réalisé dans un matériau à faible coefficient de frottement, est de plus monté entre le tube 10 de première extrémité et le tube 11 de deuxième extrémité de sorte que le coulissement du tube 10 de première extrémité par rapport au tube 11 de deuxième extrémité entraine le coulissement du palier de glissement 12 contre les parois internes du tube 11 de deuxième extrémité. Un trou 35 pratiqué dans le tube 10 de première extrémité permet l'évacuation d'éventuels condensats se formant à l'intérieur du dispositif 1. Le caractère télescopique de l'organe de manœuvre 2 permet une fonction dite d'ouverture de service décrite plus loin. La figure 5 représente le dispositif 1 avec l'organe de manœuvre 2 en position d'ouverture de service.

Le tube 10 de première extrémité constitue ainsi la première extrémité 3 de l'organe de manœuvre 2. Le tube 10 de première extrémité est de plus muni d'une collerette 13 coopérant avec la collerette 8 qui est, quant à elle, réalisée sur le tube 11 de deuxième extrémité. Les deux collerettes 8, 13 coopèrent de sorte que, lorsque le ressort 5 repousse l'organe de manœuvre 2 (état actif des moyens d'actionnement, voir figure 4) le ressort 5 prend appui sur la collerette 8 qui, elle-même, prend appui sur la collerette 13 et qui repousse donc l'ensemble de l'organe de manœuvre 2 en l'éloignant de l'élément de butée fixe 6. Le tube 10 de première extrémité est alors emmanché au maximum dans le tube 11 de deuxième extrémité, les collerettes 8, 13 venant en butée l'une contre l'autre.

L'ensemble de l'organe de manœuvre 2 (qui est donc constitué du tube 10 de première extrémité et du tube 11 de deuxième extrémité) peut se déplacer longitudinalement, le long de l'axe X, entre les deux positions extrêmes des figures 3 et 4, lorsque l'ouverture d'urgence est déclenchée. Ce mouvement de l'organe de manœuvre 2 est réalisé par coulissement de l'organe de manœuvre 2 sur un cylindre d'axe 15. Le cylindre d'axe 15 est un cylindre fixé sur l'élément de butée fixe 6 par des moyens de vissage 16. Le cylindre d'axe 15 fournit une liaison glissière pour le guidage longitudinal, le long de l'axe X, de l'organe de manœuvre 2 grâce à une portion de glissement 17 munie d'un palier de glissement 37, du tube 11 de deuxième extrémité.

L'organe de manœuvre 2 rempli sa fonction d'ouverture de service, en plus de l'ouverture d'urgence, grâce à son caractère télescopique en permettant l'ouverture et la fermeture de la porte d'aéronef dans des conditions normales d'utilisation, c'est à dire hors des périodes d'ouverture d'urgence, le dispositif d'ouverture d'urgence étant maintenu dans un état passif et le ressort 5 restant comprimé. Pour cette fonction, un coulissement le long de l'axe X est possible entre le tube 10 de première extrémité et le tube 11 de deuxième extrémité grâce au palier de glissement 12 décrit précédemment.

Lorsque le dispositif 1 est dans sa position de la figure 3, la porte d'aéronef est fermée. À partir de cette position, la porte peut s'ouvrir selon deux modes :
- un mode d'ouverture d'urgence dans lequel les moyens d'actionnement sont activés. L'expansion du ressort 5 va alors provoquer l'éloignement de l'élément de butée fixe 6 et du tube 11 de deuxième extrémité l'un de l'autre (grâce aux collerettes 7, 8). La collerette 8 va de plus entrainer elle-même la collerette 13, donc le tube de première extrémité 10, suivant l'axe X. L'ensemble de l'organe de manœuvre 2 rejoint donc la position des figures 2 et 4, la porte étant ouverte suite à l'action de la poussée du ressort 5 ;
- un mode d'ouverture de service, dans lequel le tube 10 de première extrémité coulisse librement dans le tube 11 de deuxième extrémité, sous l'effet de la porte qui est ouverte par une action extérieure, jusqu'à la position de la figure 5 correspondant à l'ouverture totale de la porte d'aéronef.

Pour permettre le verrouillage de l'organe de manœuvre 2 dans sa position de figures 1 et 3, le tube 11 de deuxième extrémité comporte un doigt axial de retenue 19 traversant le tube 11 de part en part, suivant un diamètre. Le doigt 19 peut être constitué, par exemple, d'un axe métallique plein, d'une goupille, ou d'une vis, qui peuvent être vissés ou sertis sur le tube 11.

Le doigt 19 est inséré dans une double rainure 20 pratiquée dans le cylindre d'axe 15 empêchant la rotation relative du tube 11 de deuxième extrémité par rapport au cylindre d'axe 15 selon l'axe longitudinal. Une liaison glissière est ainsi réalisée entre l'organe de manœuvre 2 et le cylindre d'axe 15.

Le doigt 19 assure de plus une fonction de butée de fin de course. Dans la position de fin de course de la figure 4, l'organe de manœuvre 2 est arrêté grâce à la butée du doigt 19 contre des surfaces d'extrémité 21 de la double rainure 20.

La figure 6 est une vue agrandie du cadre VI de la figure 3. Dans cette position verrouillée, le verrou rotatif 9 est en position fermée et coopère avec le doigt 19 pour la retenue de la deuxième extrémité 4 de l'organe de manœuvre 2.

Le verrou rotatif 9 est monté sur le cylindre d'axe 15 selon une liaison pivot permettant sa rotation autour de l'axe X, grâce à une bague glissante 22 présentant un faible coefficient de frottement. Le verrou rotatif 9 est axialement fixé sur le cylindre d'axe 15 entre deux butées axiales glissantes constituées par une butée à bille 23 disposée entre le verrou rotatif 9 et un épaulement 24 du cylindre d'axe 15, ainsi que par une collerette d'arrêt axial 39 de la bague glissante 22. Le verrou rotatif 9 est ainsi en liaison pivot non glissant sur le cylindre d'axe 15. La butée à bille 23 et la bague glissante 22 permettent une rotation avec peu d'effort de frottement du verrou rotatif 9 par rapport au cylindre d'axe 15. Le verrou rotatif 9 est solidaire d'un moyen d'activation constitué par un levier 31 permettant de commander la rotation du verrou 9. Le levier 31 est mobile dans une fenêtre de travail 36 pratiquée dans l'élément 6 de butée fixe et interrompant la collerette 7 d'appui pour le ressort 5 (voir figures 1 et 2). L'élément 6 de butée fixe comporte deux avancées 38 permettant de maximiser la surface d'appui pour les ressorts 5, compte tenu de la présence de la fenêtre de travail 36.

Le doigt 19 comporte par ailleurs deux bagues de roulage 25 dans le prolongement l'une de l'autre avec, entre les deux bagues de roulage 25, un anneau séparateur 26. Les deux bagues de roulage 25, et éventuellement l'anneau séparateur 26, sont en liaison pivot avec le doigt 19, avec une rotation possible autour de l'axe longitudinal du doigt 19.

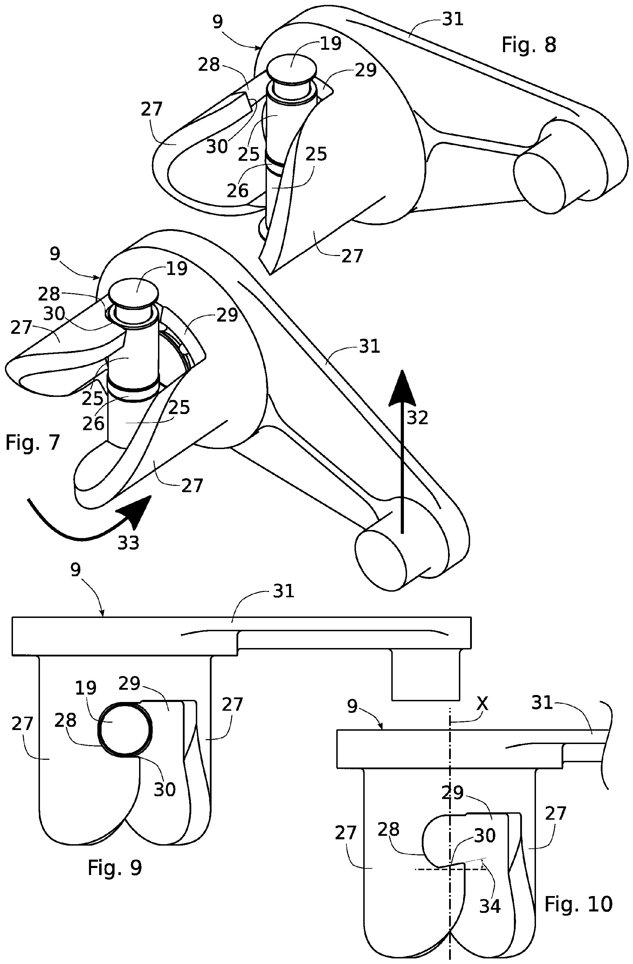

La coopération du verrou rotatif 9 et du doigt 19 va être décrite en référence aux figures 7 et 8 qui représentent uniquement ces deux organes 9, 19 pour les besoins de la description. Sur la figure 7, le verrou rotatif 9 est dans sa position fermée où il retient le doigt 19, et donc la deuxième extrémité 4 de l'organe de manœuvre 2, à l'encontre du ressort 5 qui est comprimé (ce qui correspond à la position de la figure 3). Sur la figure 8, le verrou rotatif 9 est dans sa position ouverte et ne retient plus le doigt 19, ce qui correspond à une libération de la deuxième extrémité 4 de l'organe de manœuvre 2, préalable à une expansion du ressort 5 qui conduira à la position de la figure 4.

Le verrou rotatif 9 comporte deux languettes 27 opposées qui comportent chacune un crochet 28, ces deux languette 27 s'étendant axialement c'est à dire parallèlement à l'axe X. Deux gorges 29 sont prévues entre les deux languettes 27 de sorte que, dans la position ouverte de la figure 8, le doigt 19 de la deuxième extrémité 4 puisse être inséré dans le fond des gorges 29 et, dans la position fermée de la figure 7, une rotation du verrou rotatif 9 vers sa position fermée entraine une retenue du doigt 19 par les crochets 28.

La figure 9 est une vue de dessus de la figure 6 et montre la coopération d'un crochet 28 avec le doigt 19. Le crochet 28 retient le doigt 19 par l'intermédiaire d'une surface d'arrêt 30 contre laquelle le doigt 19 est contraint par la force du ressort 5. La surface d'arrêt 30 est orthogonale à l'axe X.

Lorsque le dispositif 1 est dans la position des figures 1 et 3, le verrou rotatif 9 étant dans sa position fermée de la figure 7, l'ouverture d'urgence peut être actionnée par un utilisateur en actionnant le levier 31 selon la flèche 32 de la figure 7, ce qui entraine une rotation du verrou rotatif 9 selon la flèche 33. Chaque bague de roulage 25 va ensuite rouler sur la surface d'arrêt 30 (en tournant chacune par rapport au doigt 19 mais dans un sens opposé) jusqu'à la position de la figure 8 où le verrou rotatif 9 est en position ouverte et où l'organe de manœuvre 2, qui n'est alors plus retenu, est immédiatement poussé par le ressort 5 vers sa position de la figure 4, ce qui entraine l'ouverture d'urgence. L'anneau séparateur 26 permet la rotation des bagues de roulage 25 dans deux sens opposés.

La figure 10 illustre une caractéristique optionnelle pour la surface d'arrêt 30. Selon cette variante, la surface d'arrêt 30, tout en restant sensiblement orthogonale à l'axe X, présente cependant un angle 34 de sécurité. L'angle 34 est formé entre la surface d'arrêt 30 et une surface strictement orthogonale à l'axe X (schématisée en pointillés). Cet angle 34 est de préférence compris entre 1 et 5° et permet au verrou rotatif 9 d'être stable en position fermée et d'éviter le déclenchement intempestif du dispositif d'ouverture par des vibrations, ou autres phénomènes, qui pourraient entrainer une rotation non souhaitée du verrou rotatif 9.

Optionnellement, le levier 31 peut également être sécurisé contre les déclenchements intempestifs par une goupille telle qu'une broche à bille.

Des variantes de réalisation peuvent être envisagées sans sortir du cadre de l'invention selon les revendications annexées. Par exemple, les languettes 27 du verrou rotatif 9 peuvent entourer, par l'extérieur, le tube 11 de deuxième extrémité, plutôt que d'être insérées à l'intérieur de ce tube 11. Le doigt 19 serait alors saillant de part et d'autre du tube 11 de deuxième extrémité pour coopérer avec les crochets 28.

Par ailleurs, le nombre de languettes 27 et de crochets 28 peut varier, au moins un crochet 28 étant nécessaire pour coopérer avec le doigt 19.

L'activation du dispositif 1 d'ouverture d'urgence peut se faire par d'autres moyens qu'un levier, par exemple une crémaillère permettant de faire tourner le verrou rotatif 9.

Le cylindre d'axe 15 peut par exemple entourer le tube 11 de deuxième extrémité au lieu du contraire.

## Revendications

1. Dispositif d'ouverture d'urgence d'une porte d'aéronef dotée d'un mécanisme d'ouverture, comprenant :
- des moyens d'actionnement (2, 5) adaptés à actionner le mécanisme d'ouverture, commutables entre un état passif et un état actif d'activation du mécanisme d'ouverture, et comprenant : un organe de manœuvre tubulaire (2) doté d'une première extrémité (3) adaptée à être reliée à la porte, et d'une deuxième extrémité de verrouillage (4) ; des moyens élastiques de compression (5) disposés entre un élément de butée fixe (6) et l'organe de manœuvre (2) ; un organe de retenue (9) de la deuxième extrémité de verrouillage (4), mobile entre une position fermée de verrouillage de la deuxième extrémité de verrouillage (4), dans une position de l'organe de manœuvre (2) correspondant à l'état passif des moyens d'actionnement dans laquelle les moyens élastiques (5) sont maintenus comprimés, et une position ouverte de libération de la deuxième extrémité de verrouillage (4) autorisant le déplacement de l'organe de manœuvre (2) selon un axe de déplacement (X) vers une position correspondant à l'état actif des moyens d'actionnement, sous l'effet de l'effort résultant de l'expansion des moyens élastiques (5) ;
- des moyens d'activation (31) des moyens d'actionnement (2, 5) adaptés pour entrainer l'ouverture de l'organe de retenue (9) ;
ce dispositif d'ouverture d'urgence étant **caractérisé en ce que** :
- l'organe de manœuvre (2) comporte un doigt radial de retenue (19) sur sa deuxième extrémité de verrouillage (4) ;
- l'organe de retenue (9) comporte un crochet (28) qui présente une surface d'arrêt (30), l'organe de retenue (9) étant rotatif autour de l'axe de déplacement (X) entre sa position fermée, où la surface d'arrêt (30) est en contact avec le doigt radial de retenue (19) pour le verrouillage de la deuxième extrémité de verrouillage (4), et sa position ouverte, où la surface d'arrêt (30) est à l'écart du doigt radial de retenue (19).

2. Dispositif selon la revendication 1, **caractérisé en ce que** la deuxième extrémité de verrouillage (4) est radialement traversée de part en part par le doigt radial de retenue (19).

3. Dispositif selon l'une quelconque des revendications précédentes, **caractérisé en ce que** l'organe de retenue comporte un verrou rotatif (9) muni d'une languette (27) s'étendant axialement, le crochet (28) étant pratiqué dans la languette (27).

4. Dispositif selon la revendication 3, **caractérisé en ce que** le verrou rotatif (9) comporte deux languettes (27) s'étendant axialement, un crochet (28) étant pratiqué dans chaque languette (27), deux gorges pour le passage du doigt radial de retenue (19) étant ménagées entre les languettes (28).

5. Dispositif selon l'une quelconque des revendications précédentes, **caractérisé en ce que** les moyens d'activation des moyens d'actionnement (2, 5) comportent un levier (31) adapté à provoquer la rotation de l'organe de retenue (9).

6. Dispositif selon la revendication 5, **caractérisé en ce que** l'élément de butée fixe (6) comporte :
- une collerette d'appui (7) pour les moyens élastiques (5) ;
- une fenêtre de travail (36) adaptée à la course du levier (31) et interrompant la collerette d'appui (7).

7. Dispositif selon l'une quelconque des revendications précédentes, **caractérisé en ce que** l'organe de retenue (9) présente une forme s'inscrivant dans un cylindre coaxial avec l'organe de manœuvre (2).

8. Dispositif selon l'une quelconque des revendications précédentes, **caractérisé en ce que** l'organe de retenue (9) est monté tournant par rapport à l'élément de butée fixe (6).

9. Dispositif selon l'une quelconque des revendications précédentes, **caractérisé en ce qu'**il comporte un cylindre d'axe (15) fixé sur l'élément de butée fixe (6), l'organe de manœuvre (2) étant monté coulissant sur le cylindre d'axe (15) suivant l'axe de déplacement (X).

10. Dispositif selon la revendication 9, **caractérisé en ce que** l'organe de manœuvre (2) entoure le cylindre d'axe (15) et comporte une portion de glissement (17) guidant le coulissement de l'organe de manœuvre (2) sur le cylindre d'axe (15).

11. Dispositif selon l'une des revendications 9 et 10, **caractérisé en ce que** l'organe de retenue (9) entoure le cylindre d'axe (15) et est monté tournant sur le cylindre d'axe (15).

12. Dispositif selon la revendication 11, **caractérisé en ce que** l'organe de retenue (9) est axialement fixé sur le cylindre d'axe (15) en étant maintenu entre deux butées axiales glissantes (23, 39).

13. Dispositif selon l'une quelconque des revendications 9 à 12, **caractérisé en ce que** le cylindre d'axe (15) comporte une rainure de guidage (20) pour le guidage le long de l'axe de déplacement (X) du doigt radial de retenue (19).

14. Dispositif selon la revendication 13, **caractérisé en ce que** le doigt radial de retenue (19) traverse radialement le cylindre d'axe (15) au niveau de la rainure de guidage (20).

15. Dispositif selon l'une des revendications 13 et 14, **caractérisé en ce que** la rainure de guidage (20) comporte une butée de fin de course (21) pour le doigt radial de retenue (19).

16. Dispositif selon l'une quelconque des revendications précédentes, **caractérisé en ce que** le doigt radial de retenue (19) comporte une bague de roulage (25) adaptée à rouler sur la surface d'arrêt (30).

17. Dispositif selon l'une quelconque des revendications précédentes, **caractérisé en ce que** la surface d'arrêt (30) est sensiblement orthogonale à l'axe de déplacement (X).

18. Dispositif selon la revendication 17, **caractérisé en ce que** la surface d'arrêt (30) forme, par rapport à une surface orthogonale à l'axe de déplacement (X), un angle compris entre 1 et 5 degrés.

19. Dispositif selon l'une quelconque des revendications précédentes, **caractérisé en ce que** les moyens élastiques de compression comportent un ressort tubulaire (5) entourant, au moins partiellement, l'organe de manœuvre (2), et dont les extrémités sont disposées entre l'élément de butée fixe (6) et l'organe de manœuvre (2).

## Patentansprüche

1. Notöffnungsvorrichtung für eine Flugzeugtür mit einem Öffnungsmechanismus, umfassend:
- Betätigungsmittel (2, 5), die dazu eingerichtet sind, den Öffnungsmechanismus zu betätigen, zwischen einem passiven Zustand und einem aktiven Zustand der Aktivierung des Öffnungsmechanismus umschaltbar sind und umfassen: ein rohrförmiges Betätigungselement (2) mit einem ersten Ende (3), das dazu eingerichtet ist, mit der Tür verbunden zu werden, und einem zweiten Verriegelungsende (4); elastische Kompressionsmittel (5), die zwischen einem feststehenden Anschlagelement (6) und dem Betätigungselement (2) angeordnet sind; ein Halteelement (9) für das zweite Verriegelungsende (4), das beweglich ist zwischen einer geschlossenen Position der Verriegelung des zweiten Verriegelungsendes (4) in einer dem passiven Zustand der Betätigungsmittel entsprechenden Position des Betätigungselements (2), in welcher die elastischen Mittel (5) komprimiert gehalten werden, und einer offenen Position der Freigabe des zweiten Verriegelungsendes (4), welche die Verschiebung des Betätigungselements (2) unter der Einwirkung der aus der Ausdehnung der elastischen Mittel (5) resultierenden Kraft entlang einer Verschiebeachse (X) zu einer dem aktiven Zustand der Betätigungsmittel entsprechenden Position hin ermöglicht;
- Aktivierungsmittel (31) für die Betätigungsmittel (2, 5), die dazu eingerichtet sind, das Öffnen des Halteelements (9) zu bewirken;
wobei diese Notöffnungsvorrichtung **dadurch gekennzeichnet ist, dass**:
- das Betätigungselement (2) an seinem zweiten Verriegelungsende (4) einen radialen Haltefinger (19) aufweist;
- das Halteelement (9) einen Haken (28) aufweist, welcher eine Anschlagfläche (30) aufweist, wobei das Halteelement (9) um die Verschiebeachse (X) zwischen seiner geschlossenen Position, in der sich die Anschlagfläche (30) zur Verriegelung des zweiten Verriegelungsendes (4) mit dem radialen Haltefinger (19) in Kontakt befindet, und seiner offenen Position, in der sich die Anschlagfläche (30) in einem Abstand von dem radialen Haltefinger (19) befindet, drehbar ist.

2. Vorrichtung nach Anspruch 1, **dadurch gekennzeichnet, dass** das zweite Verriegelungsende (4) von dem radialen Haltefinger (19) vollständig radial durchquert wird.

3. Vorrichtung nach einem der vorhergehenden Ansprüche, **dadurch gekennzeichnet, dass** das Halteelement einen Drehriegel (9) aufweist, der mit einer sich axial erstreckenden Zunge (27) versehen ist, wobei der Haken (28) in der Zunge (27) eingeformt ist.

4. Vorrichtung nach Anspruch 3, **dadurch gekennzeichnet, dass** der Drehriegel (9) zwei sich axial erstreckende Zungen (27) aufweist, wobei in jeder Zunge (27) ein Haken (28) eingeformt ist, wobei zwischen den Zungen (28) zwei Auskehlungen für den Durchgang des radialen Haltefingers (19) ausgebildet sind.

5. Vorrichtung nach einem der vorhergehenden Ansprüche, **dadurch gekennzeichnet, dass** die Aktivierungsmittel für die Betätigungsmittel (2, 5) einen Hebel (31) aufweisen, der dazu eingerichtet ist, die Drehung des Halteelements (9) hervorzurufen.

6. Vorrichtung nach Anspruch 5, **dadurch gekennzeichnet, dass** das feststehende Anschlagelement (6) aufweist:
- einen Auflagebund (7) für die elastischen Mittel (5) ;
- ein Arbeitsfenster (36), dass an den Hub des Hebels (31) angepasst ist und den Auflagebund (7) unterbricht.

7. Vorrichtung nach einem der vorhergehenden Ansprüche, **dadurch gekennzeichnet, dass** das Halteelement (9) eine Form aufweist, die in einen mit dem Betätigungselement (2) koaxialen Zylinder einbeschrieben werden kann.

8. Vorrichtung nach einem der vorhergehenden Ansprüche, **dadurch gekennzeichnet, dass** das Halteelement (9) in Bezug auf das feststehende Anschlagelement (6) drehbar gelagert ist.

9. Vorrichtung nach einem der vorhergehenden Ansprüche, **dadurch gekennzeichnet, dass** sie einen Achsenzylinder (15) aufweist, der an dem feststehenden Anschlagelement (6) befestigt ist, wobei das Betätigungselement (2) auf dem Achsenzylinder (15) entlang der Verschiebeachse (X) verschiebbar gelagert ist.

10. Vorrichtung nach Anspruch 9, **dadurch gekennzeichnet, dass** das Betätigungselement (2) den Achsenzylinder (15) umgibt und einen Gleitabschnitt (17) aufweist, der die Verschiebung des Betätigungselements (2) auf dem Achsenzylinder (15) führt.

11. Vorrichtung nach einem der Ansprüche 9 und 10, **dadurch gekennzeichnet, dass** das Halteelement (9) den Achsenzylinder (15) umgibt und auf dem Achsenzylinder (15) drehbar gelagert ist.

12. Vorrichtung nach Anspruch 11, **dadurch gekennzeichnet, dass** das Halteelement (9) am Achsenzylinder (15) axial befestigt ist, wobei es zwischen zwei gleitenden axialen Anschlägen (23, 39) gehalten wird.

13. Vorrichtung nach einem der Ansprüche 9 bis 12, **dadurch gekennzeichnet, dass** der Achsenzylinder (15) eine Führungsnut (20) zur Führung des radialen Haltefingers (19) entlang der Verschiebeachse (X) aufweist.

14. Vorrichtung nach Anspruch 13, **dadurch gekennzeichnet, dass** der radiale Haltefinger (19) den Achsenzylinder (15) an der Führungsnut (20) radial durchquert.

15. Vorrichtung nach einem der Ansprüche 13 und 14, **dadurch gekennzeichnet, dass** die Führungsnut (20) einen Endanschlag (21) für den radialen Haltefinger (19) aufweist.

16. Vorrichtung nach einem der vorhergehenden Ansprüche, **dadurch gekennzeichnet, dass** der radiale Haltefinger (19) eine Rollhülse (25) aufweist, die dazu eingerichtet ist, auf der Anschlagfläche (30) zu rollen.

17. Vorrichtung nach einem der vorhergehenden Ansprüche, **dadurch gekennzeichnet, dass** die Anschlagfläche (30) im Wesentlichen orthogonal zur Verschiebeachse (X) ist.

18. Vorrichtung nach Anspruch 17, **dadurch gekennzeichnet, dass** die Anschlagfläche (30) in Bezug auf eine zur Verschiebeachse (X) orthogonale Fläche einen Winkel zwischen 1 und 5 Grad bildet.

19. Vorrichtung nach einem der vorhergehenden Ansprüche, **dadurch gekennzeichnet, dass** die elastischen Kompressionsmittel eine rohrförmige Feder (5) aufweisen, die das Betätigungselement (2) wenigstens teilweise umgibt und deren Enden zwischen dem feststehenden Anschlagelement (6) und dem Betätigungselement (2) angeordnet sind.

## Claims

1. An emergency opening device for an aircraft door fitted with an opening mechanism, comprising:
- actuating means (2, 5) designed to actuate the opening mechanism, which can switch between a passive state and an active state of activating the opening mechanism, and which comprise: a tubular operating member (2) provided with a first end (3) designed to be connected to the door, and with a locking second end (4); elastic compression means (5) arranged between a fixed end-stop element (6) and the operating member (2); a retainer (9) for restraining the locking second end (4), able to move between a closed position of locking of the locking second end (4), in a position of the operating member (2) corresponding to the passive state of the actuating means in which position the elastic means (5) are kept compressed, and an open position of releasing of the locking second end (4) allowing the operating member (2) to move along an axis of movement (X) toward a position corresponding to the active state of the actuating means, under the effect of the force resulting from the expansion of the elastic means (5);
- activating means (31) for activating the actuating means (2, 5) designed to bring about the opening of the retainer (9);
this emergency opening device being **characterized in that**:
- the operating member (2) has a radial retaining finger (19) on its locking second end (4);
- the retainer (9) comprises a hook (28) which has a stop surface (30), the retainer (9) being able to rotate about the axis of movement (X) between its closed position, in which the stop surface (30) is in contact with the radial retaining finger (19) to lock the locking second end (4), and its open position, in which the stop surface (30) is away from the radial retaining finger (19).

2. The device as claimed in claim 1, **characterized in that** the locking second end (4) has the radial retaining finger (19) passing radially right through it.

3. The device as claimed in either one of the preceding claims, **characterized in that** the retainer comprises a rotary latch (9) equipped with an axially extending blade (27), the hook (28) being made in the blade (27).

4. The device as claimed in claim 3, **characterized in that** the rotary latch (9) comprises two axially extending blades (27), a hook (28) being made in each blade (27), two slots for the passage of the radial retaining finger (19) being formed between the blades (28).

5. The device as claimed in any one of the preceding claims, **characterized in that** the means for activating the actuating means (2, 5) comprise a lever (31) designed to force the retainer (9) to rotate.

6. The device as claimed in claim 5, **characterized in that** the fixed end-stop element (6) comprises:
- an abutment flange (7) against which the elastic means (5) can bear;
- a working window (36) tailored to suit the travel of the lever (31) and interrupting the abutment flange (7).

7. The device as claimed in any one of the preceding claims, **characterized in that** the retainer (9) has a shape that can be inscribed inside a cylinder coaxial with the operating member (2).

8. The device as claimed in any one of the preceding claims, **characterized in that** the retainer (9) is mounted with the ability to rotate with respect to the fixed end-stop element (6).

9. The device as claimed in any one of the preceding claims, **characterized in that** it comprises an axis cylinder (15) fixed to the fixed end-stop element (6), the operating member (2) being mounted with the ability to slide on the axis cylinder (15) along the axis of movement (X).

10. The device as claimed in claim 9, **characterized in that** the operating member (2) surrounds the axis cylinder (15) and comprises a sliding portion (17) guiding the sliding of the operating member (2) on the axis cylinder (15).

11. The device as claimed in one of claims 9 and 10, **characterized in that** the retainer (9) surrounds the axis cylinder (15) and is mounted with the ability to rotate on the axis cylinder (15).

12. The device as claimed in claim 11, **characterized in that** the retainer (9) is axially fixed to the axis cylinder (15), being held between two sliding axial end stops (23, 39).

13. The device as claimed in any one of claims 9 to 12, **characterized in that** the axis cylinder (15) comprises a guide slot (20) for guiding the radial retaining finger (19) along the axis of movement (X).

14. The device as claimed in claim 13, **characterized in that** the radial retaining finger (19) passes radially through the axis cylinder (15) at the guide slot (20).

15. The device as claimed in either one of claims 13 and 14, **characterized in that** the guide slot (20) has an end-of-travel end stop (21) for the radial retaining finger (19).

16. The device as claimed in any one of the preceding claims, **characterized in that** the radial retaining finger (19) comprises a rolling ring (25) designed to roll over the stop surface (30).

17. The device as claimed in any one of the preceding claims, **characterized in that** the stop surface (30) is substantially orthogonal to the axis of movement (X).

18. The device as claimed in claim 17, **characterized in that** the stop surface (30) forms, with respect to a surface orthogonal to the axis of movement (X), an angle comprised between 1 and 5 degrees.

19. The device as claimed in any one of the preceding claims, **characterized in that** the elastic compression means comprise a tubular spring (5) at least partially surrounding the operating member (2) and the ends of which are placed between the fixed end-stop element (6) and the operating member (2).
